# EUROPÄISCHE PATENTSCHRIFT

(11) **EP 2 004 311 B1**
(45) Veröffentlichungstag und Bekanntmachung des Hinweises auf die Patenterteilung: **11.07.2012**
(21) Anmeldenummer: 07723094.4
(22) Anmeldetag: 08.03.2007
(51) Int. Cl.: B01D 53/60, B01D 53/68, B01D 53/70, F23J 15/04

(54) **VERFAHREN UND VORRICHTUNG ZUR REDUZIERUNG VON STICKOXIDEN UND HALOGENIERTEN ORGANISCHEN VERBINDUNGEN IN VERBRENNUNGSANLAGEN**
PROCESS AND APPARATUS FOR REDUCING NITROGEN OXIDES AND HALOGENATED ORGANIC COMPOUNDS IN INCINERATION PLANTS
PROCÉDÉ ET DISPOSITIF PERMETTANT DE RÉDUIRE LES NOX ET LES COMPOSÉS ORGANIQUES HALOGÉNÉS DANS LES INCINÉRATEURS

(30) Priorität: 11.04.2006 DE 102006016963
(43) Veröffentlichungstag der Anmeldung: 24.12.2008
(73) Patentinhaber: Karlsruher Institut für Technologie, 76131 Karlsruhe (DE)
(72) Erfinder: HUNSINGER, Hans, 76356 Weingarten (DE)
(86) Internationale Anmeldenummer: PCT/EP2007/001996
(87) Internationale Veröffentlichungsnummer: WO 2007/118554

(56) Entgegenhaltungen:
- WO-A-92/00136
- WO-A-2005/021136
- DE-A1- 3 912 563
- DE-A1- 19 849 021
- DE-C1- 4 032 945
- JP-A- 54 082 366
- RAGHUNATHAN K ET AL: "Role of Sulfur in Reducing PCDD and PCDF Formation" ENVIRONMENTAL SCIENCE AND TECHNOLOGY, AMERICAN CHEMICAL SOCIETY. EASTON, PA, US, Bd. 30, Nr. 6, 15. März 1996 (1996-03-15), Seiten 1827-1834, XP002310557 ISSN: 0013-936X in der Anmeldung erwähnt

## Beschreibung

Die Erfindung betrifft ein Verfahren sowie eine Vorrichtung zur Reduzierung von Stickoxiden und halogenierten organischen Verbindungen in Verbrennungsanlagen mit mindestens einem Brennraum gemäß des ersten und des fünften Patentanspruchs. Das Verfahren und die Vorrichtung eignen sich ferner gleichermaßen zur Minderung von Kesselkorrosion durch Reduzierung des Chlorid-Gehaltes in den beim Betrieb entstehenden Flugaschen und den gebildeten Ascheablagerungen auf den Kesseloberflächen.

Verbrennungsprozesse bei denen schwefel-, stickstoff- und chlorhaltige Brennstoffe verbrannt werden, setzen grundsätzlich Schwefeldioxid, Stickoxide und Salzsäure sowie halogenierte organische Verbindungen frei. Diese unterliegen aufgrund ihrer Toxizität oftmals nationalen Emissionsgrenzwerten und sind beispielsweise für die Bundesrepublik Deutschland vom Gesetzgeber in der 17. Bundesimmissionsschutzverordnung (17.BImSchV) für Verbindungen aus Müllverbrennungsanlagen festgeschrieben.

**Stickoxide** (NOₓ) werden beim Verbrennen von stickstoffhaltigen Brennstoffen wie z.B. Hausmüll oder diverse Biomassen wie insbesondere Halmpflanzen oder Getreide in Verbrennungsanlagen im Wesentlichen aus dem im Brennstoff gebundenen Stickstoff (N) gebildet.

In technischen Feuerungen erfolgt die Verbrennung von festen Brennstoffen in zwei Stufen. Der Festbrennstoffabbrand erfolgt in einem ersten Schritt durch Zugabe von Primärluft. Die Zufuhr an Primärluft erfolgt meist unterstöchiometrisch. Der daraus resultierende auf einen lokalen Sauerstoffmangel im Brennbett zurückzuführende unvollständigen Ausbrand der primär gebildeten Rauchgase erfordert die Zugabe und Vermischung von Sekundärluft in das noch heizwertreiche Abgas wodurch eine Nachverbrennung eingeleitet wird. Dabei kommt es lokal zu sehr hohen Temperaturspitzen, wobei aus dem Brennstoffstickstoff primär gebildeten Ammoniak (NH₃) und Cyanwasserstoff (HCN) während des Abgasausbrandes über komplexe Reaktionen letztendlich NO oder N₂ gebildet wird. Eine thermische Stickoxidbildung (NOₓ -Bildung, aus dem Luftstickstoff ist dagegen aufgrund des relativ niedrigen Temperaturniveaus in diesen Verbrennungsanlagen vergleichsweise gering.

Bei dem sog. SNCR (Selective Non Catalytic Reduction) Verfahren wird Ammoniak (NH₃) oder auch andere N-haltige Reduktionsmittel wie wässrige Ammoniaklösungen oder Harnstoff in das sauerstoffhaltige Abgas nach der Abgasausbrandzone im Temperaturbereich von 850 bis 1050°C zur selektiven nicht katalytischen Reduktion von Stickoxiden ins Abgas eingedüst. Zu hohe Temperaturen führen zur Bildung von NO (Stickstoffmonoxid), zu niedrige Temperaturen erhöhen den NH₃-Schlupf. Meist wird eine wässrige Ammoniaklösung (NH₄OH) verwendet. Bei der Verdampfung dieser Lösung wird Ammoniak (NH₃) freigesetzt und NO wird im zuvor genannten Temperaturniveau zu N₂ reduziert.

4NH₃ + 4NO +O₂ → 4N₂ + 6 H₂O (1)

NH₃ kann auch als Neutralisationsmittel in neutral oder leicht sauer betriebenen SO₂ Wäschern **[1]** eingesetzt werden. Ist dem SO₂ Wäscher ein sauer betriebener erster Wäscher (meist bei pH-Werten <1) vorgeschaltet in dem HCl praktisch quantitativ abgeschieden so wird SO₂ in der nachgeschalteten zweiten Waschstufe (SO₂ Wäscher) mittels NH₃ bei pH ≤ 7 selektiv abgeschieden (vgl. **[2]**).

2NH₃ + H₂O + SO₂ → (NH₄)₂SO) (2)

Das gebildete Ammoniumsulfit (NH₄)₂SO₃ wird mit dem im Abgas enthaltenen Sauerstoff oder durch zusätzlich zugeführte Oxidationsluft zu Ammoniumsulfat (NH₄)₂SO₄ oxidiert.

(NH₄)₂SO₃ + O₂ → (NH₄)₂SO₄ (3)

**Halogenierte organische Verbindungen** sind beispielsweise polychlorierte Dibenzo-p-dioxine und Dibenzofurane (PCDD/F), welche sich in Verbrennungsprozessen, insbesondere in der Müllverbrennung bilden und mit dem Abgas abgeleitet werden. Die Bildung von PCDD/F wird im Wesentlichen durch die kohlenstoff- und chloridhaltigen Flugascheablagerungen auf den Kesseloberflächen oder bei der Entaubung im Temperaturbereich >200°C verursacht. Das Bildungsmaximum von PCDD/F liegt im Temperaturbereich von ca. 300 bis 350°C.

Aufgrund ihrer Toxizität hat der Gesetzgeber in der Bundesrepublik Deutschland in der 17. Bundesimmissionsschutzverordnung (17.BImSchV) einen Grenzwert für die Emission dieser Verbindungen aus Müllverbrennungsanlagen von 0.1 ng TEQ/Nm³ (TEQ= Toxizitätsäquivalent) festgelegt. Dieser Grenzwert für PCDD/F im Verbrennungsabgas ist nach heutigem Kenntnisstand durch eine alleinige Optimierung der Feuerungsbedingungen nicht einhaltbar. Insofern ist es Stand der Technik, die Konzentration der PCDD/F im Verbrennungsabgas mit einer der Verbrennung nachgeschalteten zusätzlichen Rauchgasreinigung unter den vorgeschriebenen Grenzwert abzusenken. Müllverbrennungsanlagen bestehen im Wesentlichen aus einen Brennraum ggf. mit einem Kessel, mindestens einem nachgeschalteten Staubabscheider und Nasswäschern sowie zusätzlichen adsorptiv und/oder katalytisch wirkenden Rauchgasreinigungsverfahren zur NOₓ und/oder PCDD/F Minderung. Für die NOₓ Minderung wird auch häufig das SNCR-Verfahren eingesetzt.

Aus **[3]** und **[4]** ist allgemein bekannt, dass sich der PCDD- und PCDF-Anteil in einem Abgas auch allein durch einen Schwefelüberschuss im Verhältnis zum Chlorinventar bei einer Verbrennung erheblich reduzieren lässt. Dabei kommt es insbesondere auf das Verhältnis von Schwefeldioxid zu Salzsäure im bei der Verbrennung gebildeten Rauchgase an, wobei sich bei steigendem Verhältnis von Schwefeldioxid zu Salzsäure eine erhebliche Reduzierung der Chloridgehalte der Flugaschen durch Sulfatierungsreaktionen einstellt.

2 (Na, K) Cl + SO₂ + ½ O₂ + H₂O → (Na, K)₂SO₄ + 2HCl (4)

Metallchloride zeigen ein analoges Verhalten wie die Alkalien. Die Chloride der Flugaschen werden bei der Sulfatierung in Sulfate umgewandelt. Die gebildeten chloridarmen Flugaschen bewirken eine drastische Minderung des PCDD- und PCDF-Bildungspotentials und führen somit zu einer signifikanten Minderung der PCDD/F Konzentration im Abgas. Chloridarme Flugascheablagerungen bewirken zusätzlich eine Minderung der Kesselkorrosionsraten.

In **[5]** wird ein Verfahren offenbart, bei dem SO₂ aus dem Rauchgas in mindestens einem Wäscher selektiv abgeschieden wird und in den Brennraum als SO₂ oder Schwefelsäure rezykliert wird. Durch die selektive Abscheidung von SO₂ in einem Wäscher steht für die Rezyklierung hochkonzentriertes SO₂ zur Verfügung. Die Kreislaufführung führt zur Anreicherung von SO₂ und damit zur Erniedrigung des Cl/S-Verhältnisses im Abgas in den für die PCDD/F-Bildung relevanten Prozesszonen. Bei diesem Verfahren wird jedoch keine NOₓ-Minderung erreicht. Bei dem Verfahren wird als Rückstand eine wässrige Mischsalzlösung aus Chloriden und Sulfaten gebildet.

Davon ausgehend ist es **Aufgabe der Erfindung**, eine Vorrichtung und ein Verfahren zur gleichzeitigen Reduzierung von Stickoxiden und halogenierten organischen Verbindungen in Verbrennungsanlagen mit mindestens einen Brennraum vorzuschlagen, bei denen sich die vorgenannten Nachteile oder Einschränkungen nicht oder in einem erheblich reduziertem Maße einstellen.

Die Aufgabe wird durch ein Verfahren mit den Merkmalen aus Anspruch 1 und eine Vorrichtung mit den Merkmalen aus Anspruch 5 gelöst. Die Unteransprüche geben vorteilhafte Ausführungsformen wieder.

Die Aufgabe wird mit einem Verfahren zur Reduzierung von Stickoxiden und halogenierten organischen Verbindungen in Verbrennungsanlagen mit mindestens einem Brennraum gelöst, bei dem Schwefeldioxid SO₂ aus dem Rauchgas in mindestens einem Wäscher mittels Ammoniak oder Ammoniumverbindungen selektiv abgeschieden wird, wobei sich eine wässrige Ammoniumsulfat- /-sulfit-lösung bildet, die ganz oder teilweise in den Brennraum, vorzugsweise nach der Nachbrennzone rezykliert wird.

Der Grundgedanke der Erfindung basiert darin, dass man ausgehend vom dem vorgenannten SNCR-Prozess das Ammoniak nicht in die Nachbrennkammer zur Stickoxidminderung (vgl. Gleichung (1)) direkt, sondern zuvor als Zusatz in den Waschwasserkreislauf eines neutralen oder leicht sauren Wäschers der einem HCl-Wäscher nachfolgend angeordnet ist einbringt und zur Abscheidung von SO₂ unter Bildung einer wässrigen Ammoniumsulfat-/-sulfitlösung (vgl. Gleichung (2) und (3)) heranzieht.

Das für das SNCR Verfahren benötigte NH₃ wird also ganz oder teilweise für die Abscheidung von SO₂ im Nasswäscher eingesetzt. Die sich beim Waschprozess im Wäscher bildende Ammoniumsulfat-/-sulfitlösung lässt sich dann ganz oder teilweise anstelle des Ammoniaks oder zusätzlich zur wässrigen Ammoniaklösung für den vorgenannten SNCR-Prozess in die Nachbrennzone eingeben. Dabei kommt es zur thermischen Zersetzung des Ammoniumsulfat-/-sulfits unter Bildung von NH₃, N₂ und SO₂. Die Bildung von SO₂ erfolgt praktisch quantitativ, Während nur ein Teil des Stickstoffs aus dem Ammoniumsulfat als NH₃ zurückgewonnen wird. Das gebildete NH₃ steht dem eigentlichen SNCR Prozess wieder zur Verfügung. Bei einer bestehenden Anlage mit SNCR-Technik kann auf diese Weise das abgesalzte Waschwassers (mit (NH₄)₂SO₄) das zuvor verwendete NH₃ vollständig oder teilweise ersetzen. Vorzugsweise wird die wässrige Ammoniumsulfat-/-sulfitlösung in das sauerstoffhaltige Rauchgas in einem Temperaturbereich zwischen 850° und 1050°C, vorzugsweise 900-1000°C also dem bereits im SNCR-Verfahren bevorzugten Temperaturfenster nach der Abgasausbrandzone zugegeben.

Die nicht auf die vorgenannte Weise rezyklierte Ammoniumsulfat-/- sulfitlösung kann auch als Ammoniumsulfat (NH₄)₂SO₄ aus dem Prozess herausgenommen und separat entsorgt bzw. verwertet werden.

Bei der Zersetzung von Ammoniumsulfat und -sulfit in der Nachbrennzone wird SO₂ quantitativ freigesetzt und steht für die Erhöhung des SO₂ Konzentration im Abgas zur Verfügung (es entsteht ein SO₂-Kreislauf). Die SO₂ Konzentrationserhöhung lässt sich mit der Rückführrate einstellen. Auf diese Weise wird in vorteilhafter Weise die PCDD/F-Minderung im Abgas erzielt, wobei sich bei steigendem Verhältnis von Schwefeldioxid zu Salzsäure, wie bereits eingangs genannt, eine erhebliche Reduzierung der Chloridgehalte der Flugaschen durch Sulfatierungsreaktionen einstellt.

Ammoniumsulfat zersetzt sich in der Nachbrennzone in zwei Schritten:

T= 200-400°C: (NH₄)₂SO₄ → NH₄HSO₄ + NH₃ (5)

T> 900°C: 2NH₄HSO₄ + ½ O₂ → 2SO₂ + N₂ + SH₂O (6)

Bei über 900°C entsteht in der Nachbrennkammer vermehrt So₂, das wiederum die vorgenannte Sulfatierungsreaktion der Flugasche verstärkt. Dabei werden in den Flugaschen enthaltene Chloride durch Sulfate ersetzt, wobei sich Salzsäure bildet, die dann in einer sauer betriebenen Waschstufe aus dem Abgas abtrennbar ist.

Die Höhe der SO₂-Konzentration kann über die Rezyklierrate von Ammoniumsulfat (NH₄)₂SO₄ aus dem zweiten Wäscher gesteuert werden.

Im Rahmen der Erfindung werden also ausschließlich Stoffe (Rückstände) aus der neutral oder leicht sauer betriebenen Waschstufe rezykliert. Durch die getrennten Wäscherableitungen wird eine stoffliche Verwertung der Rückstände (z.B. HCl-Gewinnung aus einer sauer betriebenen Waschstufe) ermöglicht.

Die Zugabe der Ammoniumsulfat-/-sulfitlösung erfolgt vorzugsweise in die Nachbrennzone bevorzugt nach der Sekundärgaseinleitung und vorzugsweise mit mehreren Ein- oder Mehrstoffdüsen. Ein- und Mehrstoffdüsen dienen zur Zerstäubung der wässrigen Amminiumsulfat/- sulfitlösung und fördern eine homogene Vermischung mit dem Abgas, wobei für die Mehrstoffdüsen bevorzugt Druckluft oder Wasserdampf heranziehbar ist.

Die Erfindung wird im Folgenden mit Ausführungsbeispielen anhand der folgenden Figuren näher erläutert. Es zeigen
**Fig.1** die Prozessströme des Verfahrens in der schematisch dargestellten Vorrichtung zur Reduzierung von halogenierten organischen Verbindungen,
**Fig.2a** **und b** Schaltbilder einer bekannten SNCR-Vorrichtung (a) sowie einer hieraus modifizierten Vorrichtung zur gleichzeitigen NOₓ-Minderungen und Reduzierung von halogenierten organischen Verbindungen (b).
**Fig.3** die im Rohabgas ermittelten Substanzen in einem Versuch an einer Müllverbrennungsanlage TAMARA.

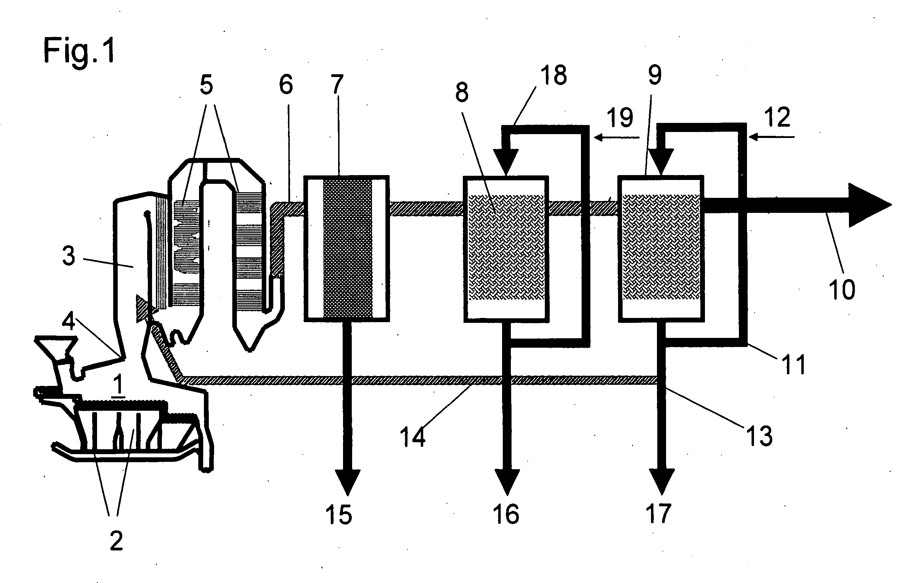

Die Erfindung in Verbindung mit einer Verbrennungsanlage besteht, wie in **Fig.1** dargestellt, aus einem Brennraum **1** mit sauerstoffhaltiger Primärgaszufuhr **2,** einer Nachbrennkammer **3** mit sauerstoffhaltiger Sekundärgaszufuhr **4,** einem Kessel **5** oder eine andere Komponente zur Kühlung des Rohabgases **6,** sowie nachgeschaltete Abreinigungsstufen für das Rohabgas. Diese Abreinigungsstufen umfassen einen Staubabscheider **7** zur Abscheidung von Flugasche **15,** beispielsweise einen Gewebefilter oder Elektrofilter, einen ersten sauer betriebenen Wäscher **8** (pH ≤1) zur Abscheidung von Salzsäure **16** sowie einen zweiten neutral oder leicht sauer betriebenen Wäscher **9** (ph ≤ 7) zur Abscheidung von SO₂ (Ableitung von Ammoniumsulfat und -sulfit **17**). Der erste sauer betriebe Wäscher **8** weist einen Wäscherkreislauf **18** mit einer Wassereinspeisung **19** auf. Nach Durchlaufen der Abreinigungsstufen wird das abgereinigte Abgas **10** beispielsweise über einen Schornstein in die Umgebung abgeleitet.

Im zweiten neutral betriebenen Wäscher **9** erfolgt eine Abreinigung von SO₂ in einem Wäscherkreislauf **11,** wobei in diesem eine Zugabe von einer wässrigen Ammoniaklösung **12** sowie eine Abtrennung **13** von sich im Wäscher aufbauenden Ammoniumsulfat-/-sulfitlösung vorgesehen ist. Die abgetrennte Ammoniumsulfat-/-sulfitlösung wird über eine Verbindungsleitung **14** wieder in den Abgasstrang (Rohabgas) im Bereich der Nachbrennkammer **3** (nach der Abgasausbrandzone) eingegeben. Der überschüssige Teil der nicht benötigten Ammoniumsulfat-/-sulfitlösung wird aus dem Prozess abgeleitet (vgl. Ableitung von Ammoniumsulfat und -sulfit **17**). Die Höhe der Ableitung ergibt sich aus der maximal erforderlichen Erhöhung der SO₂-Konzentration im Rohgas und der übe die Flugaschen **15** ausgeschleusten Sulfatmengen.

Wesentlich dabei ist, dass die Eingabe der Ammoniumsulfat-/-sulfitlösung in einem Bereich mit einem durch die Sekundärgaseingabe hervorgerufenen Sauerstoffüberschuss erfolgt, um einerseits die in den vorgenannten Formeln (5) und (6) angeführten Reaktionen, d.h. eine wirksame Stickoxidminderung sicherzustellen und andererseits eine Schwefeldioxidbildung zur Reduzierung von halogenierten organischen Verbindungen im Abgas zu fördern.

Die rezyklierte Ammoniumsulfat-/-sulfitlösung wird bevorzugt bei Eintritt in den Abgasstrang durch einen oder mehrere geeignete Einlässe zerstäubt, sodass es möglichst im gesamten Abgasquerschnitt gleichmä-βig verteilt vergleichbare Reaktionsbedingungen sicherstellt. Bevorzugt erfolgt dies durch eine Eindüsung über mindestens eine, besser aber mehrere, auf den gesamten Abgasquerschnitt wirkende Einstoff- oder Zweistoffzerstäuberdüsen.

Im Rahmen der Prozessströme erfolgt zunächst im Brennraum **1** eine Verbrennung eines Brennstoffs unter Primärgaszufuhr **2** sowie eine Nachverbrennung von noch nicht vollständig verbrannter Anteile in der Nachbrennkammer **3** unter einer Sekundärgaszufuhr **4.** Das dabei entstehende Rohabgas, das eine Temperatur im Bereich von >900°C (d.h. für die Reaktion (6) ausreichend) aufweist, wird an eine Kesselwand geleitet und gibt dort eine gewisse Wärmemenge durch Wärmeübertragung an den Kessel **5** bzw. des im Kessel befindlichen Mediums ab, wobei sich das abgekühlte Rohabgas **6** auf Temperaturen von 200 bis 300°C abkühlt. Das Rohabgas durchströmt anschließend die erste Abreinigungsstufe, den Staubabscheider **7,** den das Abgas im Rahmen des Ausführungsbeispiels mit gleichem Temperaturniveau in Richtung des ersten Wäschers **8** verlässt.

Dioxine und Fourane bilden sich im Abgasstrang bevorzugt in einem Temperaturniveau oberhalb 200°C, d.h. genau in dem zuvor genannten Temperaturniveau an Kesselwand und Staubabscheider, lassen sich aber, wie zuvor beschrieben, durch das sich in der Nachbrennzone gebildete Schwefeldioxid (Reaktion (6)) wirksam reduzieren.

Im ersten sauer betriebenen Wäscher wird bei pH-Werten bevorzugt kleiner 1 Salzsäure durch Absorption in Wasser selektiv abgeschieden, ohne dass es zu einer Abscheidung von Schwefeldioxid kommt. Folglich weist dieser Wäscher neben einer Wassereinspeisung **19** eine Leitung zur Ableitung von Salzsäure **16** auf. Die Salzsäure ist für das Verfahren zur Reduzierung von Stickoxiden und halogenierten organischen Verbindungen in Verbrennungsanlagen mit mindestens einem Brennraum gemäß der vorliegenden Erfindung nicht erforderlich und kann einer anderweitigen Verwertung zugeführt werden.

Der genannte SO₂ Kreisprozess führt zu einer schrittweisen Erhöhung der Schwefeldioxidkonzentration im Rohabgas genau in den vorgenannten Bereichen der Dioxinbildung. Unter idealen Bedingungen lässt sich das molare Cl/S -Verhältnis (von Salzsäure zu Schwefeldioxid) im Rohabgas von Haumüllverbrennungsanlagen ausgehend von 8-10 bis auf Werte von «1 (abhängig von der Rezyklierrate) erniedrigen.

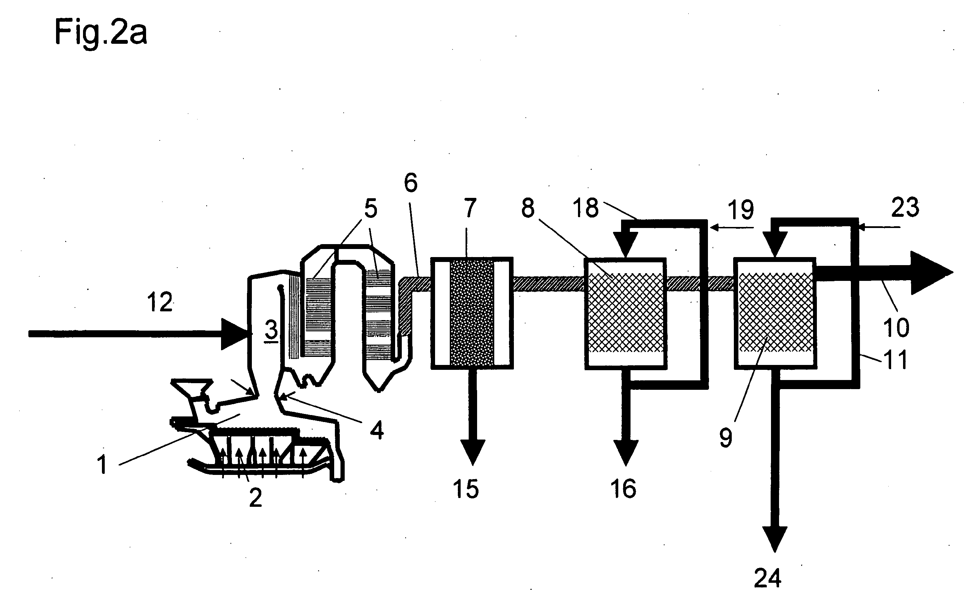

Die in **Fig.1** dargestellte Vorrichtung lässt sich mit geringem apparativen Aufwand aus einer vorhandenen SNCR-Vorrichtung (vgl. **Fig.2a**) modifizieren, und zwar ohne einen grundsätzlichen Neuanschluss für das erforderliche Ammoniak. Damit lässt sich die Anlage allein durch Ventile vom SNCR-Betrieb auf das Verfahren gemäß des Anspruchs 1 hin- und herschalten. In einer SNCR-Anlage gemäß **Fig.2a** erfolgt die Ammoniakzugabe **12** direkt in die Nachbrennkammer **3,** während der Wäscherkreislauf **11** des zweiten Wäschers **9** mit Wasser und Natrium- oder Kalziumhydroxid (Zuleitung von Natrium- oder Kalziumhydroxid **23**) gespeist wird und eine Ableitung von Natriumsulfat und Natriumsulfit oder Kalziumsulfat und Kalziumsulfit **24** aufweist.

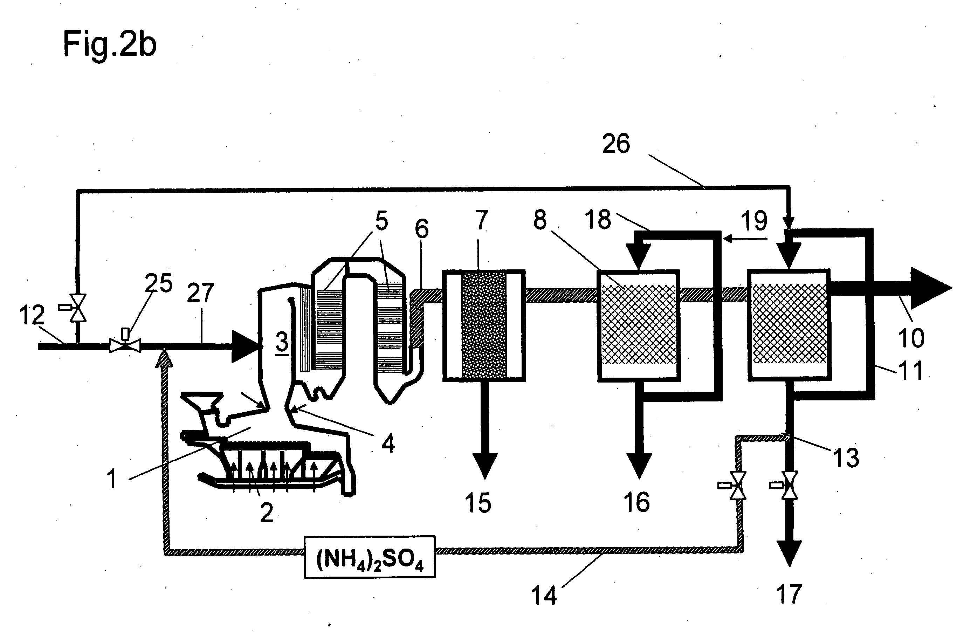

Für die Umrüstung der vorgenannten SNCR-Anlage zu einer Vorrichtung zur zusätzlichen Reduzierung von halogenierten organischen Verbindungen sind, wie **Fig.2b**, sind lediglich zwei zusätzliche Leitungsverbindungen erforderlich, wobei eine Umschaltung vom SNCR-Betrieb auf das Verfahren zur zusätzlichen Reduzierung von halogenierten organischen Verbindungen über mehrere Absperr/Regelventile erfolgt. Als Neutralisationsmittel wird anstelle von Natrium- oder Kalziumhydroxid jetzt Ammoniak eingesetzt. Die Ammoniakzugabe **12** wird über eine erste Verbindung nicht in die Nachbrennzone **3** geleitet (Ventil **25** gedrosselt oder ganz geschlossen), sondern bevorzugt über eine Ammoniakleitung **26** in den Wäscherkreislauf **11** des zweiten Wäschers geleitet. Die Zuleitung von NH₃ in die SO₂-Waschstufe erfolgt pH-Wert geregelt. Ebenso erfolgt eine Abrennung der Ammoniumsulfat-/-sulfitlösung **13** über die Verbindungsleitung **14,** zu einer Zufuhrleitung **27** zu der Nachbrennzone **3.**

### Versuchsbeispiel:

Im Folgenden wird beispielhaft das Verfahren, die Vorrichtung und die erzielten Ergebnisse von Versuchen an der Müllverbrennungsanlage TAMARA des Forschungszentrums Karlsruhe beschrieben. Der Aufbau entspricht der in **Fig.1** **oder** **2b** dargestellten Ausführungsform.

Bei Temperaturen von 1020°C wurde eine wässrige (NH₄)₂SO₄ Lösung (11/h, 600g/l, bei ca. 1000 Nm³/h Abgas) in den ersten Strahlungszug (nach der Nachbrennzone nach der Sekundärgaseinleitung) mit einer Zweistoffdüse fein dispergiert eingegeben. Der Sauerstoffanteil in **der** Nachbrennzone lag bei ca. 11 Vol.% trocken.

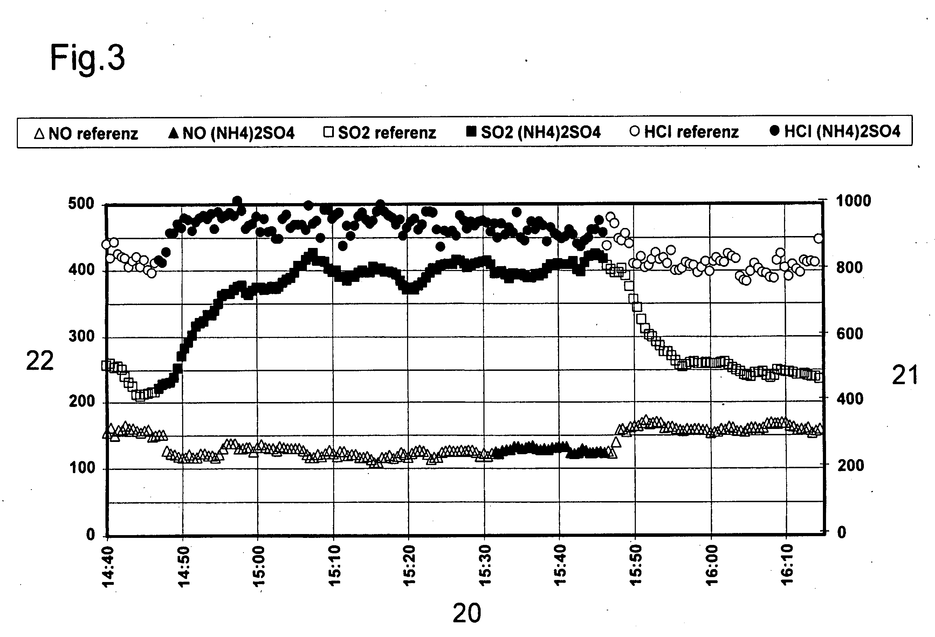

**Fig.3** zeigt als Ergebnis die in der Nachbrennzone ermittelten Konzentrationen der Substanzen HCl [mg/Nm³] **21** sowie NO und SO₂ **22** jeweils in [mg/Nm³] und aufgetragen über die Uhrzeit **20**. Die schwarzen Datenpunkte geben die Werte während der Eindüsung der vorgenannten Ammoniumsulfat-/-sulfitlösung wieder, während die weißen Messpunkte Referenzwerte ohne diese Eindüsung darstellen.

Die Erhöhung der SO₂ Konzentration und die Zunahme der Sulfatkonzentration der Flugasche entsprach der in der zugegebenen Ammoniumsulfat-/-sulfitlösung enthaltenen Schwefelmenge Bei der Dosierung stieg die HCl Konzentration sofort um ca. 130 mg/Nm³. Der HCl-Konzentrationsanstieg ist auf die Sulfatierung der chloridhaltigen Flugaschen zurückzuführen. Bereits während der kurzen Flugphase der Aschepartikel in der Hochtemperaturzone wurden aus Chloriden erhebliche Mengen an Sulfaten in den Flugaschen gebildet.

Gleichzeitig wurde die NO-Konzentration von ca. 160 auf 120 mg/Nm³ gemindert. Geht man von einer Rückgewinnung von ca. 50% NH₃ aus dem Ammoniumsulfat/-sulfit aus, so liegt bei dem Experiment eine Stöchiometrie NH₃ zu NO von n ≈ 0,75 vor. In technischen Anlagen wird n meist im Bereich von 2 bis 3 eingestellt. Die Temperatur um Zugabeort lag bei dem dargestellten Experiment auch etwas höher als dem Optimum für SNCR von ca. 980°C. Unter Berücksichtigung dieser üblichen Betriebsweisen ist bei einer entsprechenden Optimierung auch eine deutlich höhere NOₓ Minderung erreichbar. Das Ergebnis zeigt dass der beschriebene Prozess einer kombinierten NOₓ- und PCDD/F Minderung sowie eine entsprechend höhere SO₂-Konzentration generell möglich ist.

Durch das Verfahren wird ein SO₂-Kreislauf realisiert. Ein Vorteil dieser Ausführungsform liegt in einer zusätzlichen NOₓ-Minderung. Ein weiterer Vorteil des Prozesses ist, dass sich die SO₂ Konzentration völlig unabhängig von der HCl Konzentration einstellen lässt. Der apparatetechnische Aufwand, d.h. die Modifikation einer bestehenden SNCR-Anlage (vgl. **Fig.2a** **und b**), ist gering, ebenso die Betriebsmittelkosten für NH₃ (billiger als NaOH für SO₂ Abscheidung). Die Erhöhung der SO₂-Konzentration ist von der Rückführrate und der Konzentration von alkalischen Flugaschenbestandteilen abhängig und kann grundsätzlich nahezu beliebig hoch gesetzt werden. Proportional zu der S02-Erhüung steigt der Verbrauch an NH₃. Für die praktische Anwendung ist ein molares Cl/S-Verhältnis (HCl/SO₂) von etwa 1 für eine effiziente PCDD/F-Minderung meist ausreichend. Auch werden beide Waschkreisläufen (Wäscher **8** und **9**) getrennt gehalten, sodass eine getrennte Verwertung/Behandlung dieser beiden Reststoffströme ermöglicht wird.

Eine Zudosierung einer (NH₄)₂SO₄-Lösung in den Brennraum vor der Abgasausbrandzone bewirkte dagegen nur eine geringe NOₓ Minderung. Dieser Effekt ist nur auf die mit der Wassereindüsung hervorgerufene Primärgasvermischung und Temperaturabsenkung zurückzuführen. Die Erhöhung der SO₂ Konzentration lag auch in diesem Fall entsprechend der zugesetzten Sulfatmenge.

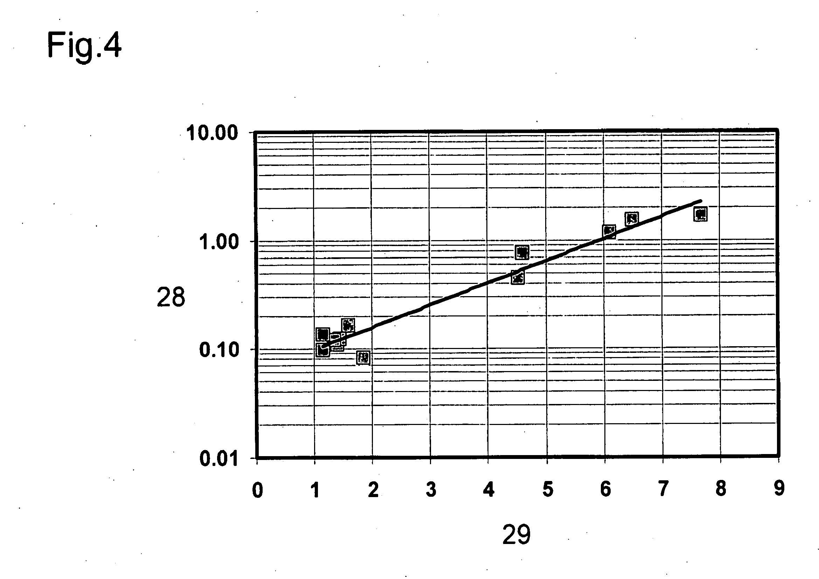

In **Fig.4** ist die PCDD/F Konzentration **28** in [ng/Nm³ TEQ] im Rohgas als Funktion des molaren Cl/S-Verhältnisses **29** (von HCl/SO₂) im Rohgas dargestellt. Die einzelnen Werte wurden jeweils bei längerem stationären Betrieb unter effizienten Abgasausbrandbedingungen an TAMARA ermittelt.

### Literatur:

[1] P. Strasser, V. Fütterer: Betriebserfahrungen mit der Rauchgasentschwefelungsanlage des Rheinhafen-Dampfkraftwerkes und des Großkraftwerkes Mannheim; Anwenderreport Abgasreinigung, Sonderheft Staub Reinhaltung der Luft (1987) Heft 10 S. 63-68
[2] DE 197 31 062 C2
[3] R.D. Griffin, "A new theory of dioxin formation in municipal solid waste combustion," Chemosphere, Vol. 15, Nos. 9-12, pp. 1987-1990, 1986
[4] K. Raghunathan, B. K. Gullett: Role of Sulfur in Reducing PCDD, and PCDF Formation; Environ. Sci. Technol. 30 (1996) S.1827-1834
[5] DE 103 38 752 B4

### Bezugszeichen

- 1: Brennraum
- 2: sauerstoffhaltige Primärgaszufuhr
- 3: Nachbrennkammer
- 4: sauerstoffhaltige Sekundärgaszufuhr
- 5: Kessel
- 6: Rohabgas
- 7: Staubabscheider
- 8: sauer betriebener Wäscher
- 9: neutral betriebener Wäscher
- 10: abgereinigtes Abgas
- 11: Wäscherkreislauf (zweite Waschstufe)
- 12: Zugabe von Ammoniak
- 13: Abtrennung der Ammoniumsulfat-/-sulfitlösung
- 14: Verbindungsleitung
- 15: Flugasche
- 16: Salzsäure
- 17: Ableitung von Ammoniumsulfat und -sulfit
- 18: Wäscherkreislauf (erste Waschstufe)
- 19: Wassereinspeisung
- 20: Uhrzeit
- 21: HCl-Anteil [mg/Nm³]
- 22: NO-Anteil, SO₂-Anteil [mg/Nm³}
- 23: Zuleitung von Natrium- oder Kalziumhydroxid
- 24: Ableitung von Natriumsulfat und Natriumsulfit oder Kalziumsulfat und Kalziumsulfit
- 25: Ventil
- 26: Ammoniakleitung
- 27: Zufuhrleitung
- 28: PCDD/F Konzentration in [ng/Nm³ TEQ]
- 29: molares Cl/S-Verhältnis (dimensionslos)

## Patentansprüche

1. Verfahren zur Reduzierung von Stickoxiden und halogenierten organischen Verbindungen in Verbrennungsanlagen mit mindestens einem Brennraum **(1,3),** wobei Schwefeldioxid SO₂ aus dem Rauchgas in mindestens einem Wäscher **(9)** mittels Ammoniak oder Ammoniumverbindungen selektiv abgeschieden wird, wobei sich eine wässrige Ammoniumsulfat-/-sulfitlösung bildet, die ganz oder teilweise in den Brennraum rezykliert wird, umfassend die folgenden Verfahrensschritte:
a) Abscheiden von Flugasche mit einem Staubabscheider **(7)**,
b) Abscheiden von Salzsäure in einem ersten sauer betriebenen Wäscher **(8)** unter Zugabe von Wasser,
c) Abscheiden von SO₂ in einem zweiten neutral oder leicht sauer betriebenen Wäscher **(9)** unter Zugabe von Wasser und Ammoniak, wobei es zur Bildung von Ammoniumsulfit und durch anschließende Reaktion mit Sauerstoff zu Ammoniumsulfat, gelöst in Wasser, kommt,
d) Weiterleiten und Einspritzen der wässrigen Ammoniumsulfat-/- sulfitlösung in das sauerstoffhaltige Rauchgas nach einer Sekundärgaszugabe, wobei es zu einer Zersetzung des Ammoniumsulfats und -sulfits unter Bildung von Ammoniak und SO₂ kommt, wobei
Stickoxide im Rauchgas mit dem Ammoniak und Sauerstoff durch selektive nicht katalytische Reduktion zu Stickstoff und Wasser reduziert werden sowie
gleichzeitig chloridhaltige Flugaschen im Rauchgas mit SO₂, Wasser und Sauerstoff zu Sulfaten unter Bildung von Salzsäure reagieren.

2. Verfahren nach Anspruch 1, wobei die wässrige Ammoniumsulfat-/- sulfitlösung in das sauerstoffhaltige Rauchgas in einem Temperaturbereich zwischen 850° und 1050°C nach der Abgasausbrandzone zugegeben wird.

3. Verfahren nach Anspruch 1 und 2, wobei die Zugabe der Ammoniumsulfat-/-sulfitlösung mit Ein- oder Mehrstoffdüsen erfolgt.

4. Vorrichtung zur Reduzierung von halogenierten organischen Verbindungen in Verbrennungsanlagen mit mindestens einen Brennraum, umfassend
a) einen Staubabscheider **(7)** zum Abscheiden der Flugaschen **(15),**
b) einen ersten sauer betriebenen Wäscher **(8)** zur Abscheidung von Salzsäure mit einer ersten Leitung zur Ableitung von Salzsäure **(16),** sowie
c) einen zweiten neutral oder leicht sauer betriebenen, dem ersten Wäscher nachfolgenden Wäscher **(9)** mit einer Zuleitung für Wasser und Ammoniak **(12)** und einer zweiten Leitung zur Ableitung einer Ammoniumsulfat-/-sulfitlösung **(17),**
wobei
d) von der zweiten Leitung eine Verbindungsleitung **(14)** zu einer Nachbrennzone **(3)** nach einer Einleitung von Sekundärgas **(4)** abzweigt.

## Claims

1. Process for reducing nitrogen oxides and halogenated organic compounds in incineration plants having at least one combustion chamber (1, 3), wherein sulfur dioxide SO₂ is selectively removed from the flue gas in at least one scrubber (9) by means of ammonia or ammonium compounds, wherein an aqueous ammonium sulfate/sulfite solution is formed which is recycled entirely or partly into the combustion chamber, comprising the following process steps:
a) removing fly ash using a dust collector (7),
b) removing hydrochloric acid in a first acid-operated scrubber (8) by adding water,
c) removing SO₂ in a second neutral or slightly acid-operated scrubber (9) by adding water and ammonia, resulting in the formation of ammonium sulfite and, by subsequent reaction with oxygen, ammonium sulfate, dissolved in water,
d) conveying and injecting the aqueous ammonium sulfate/sulfite solution into the oxygen-containing flue gas downstream of a secondary gas addition, resulting in a decomposition of the ammonium sulfate and sulfite so as to form ammonia and SO₂,
wherein
nitrogen oxides in the flue gas are reduced by the ammonia and oxygen by selective non-catalytic reduction to produce nitrogen and water and
at the same time chloride-containing fly ash in the flue gas reacts with SO₂, water and oxygen to produce sulfates and form hydrochloric acid.

2. Process according to claim 1, wherein the aqueous ammonium sulfate/sulfite solution is added to the oxygen-containing flue gas in a temperature range between 850° and 1050°C downstream of the waste gas burnout zone.

3. Process according to claims 1 or 2, wherein the addition of the ammonium sulfate/sulfite solution takes place by means of single-component or multiple-component nozzles.

4. Apparatus for reducing halogenated organic compounds in incineration plants having at least one combustion chamber, comprising:
a) a dust collector (7) for removing the fly ash (15),
b) a first acid-operated scrubber (8) for removing hydrochloric acid with a first line for discharging hydrochloric acid (16), and,
c) a second neutral or slightly acid-operated scrubber (9), downstream of the first scrubber, with a feed line for water and ammonia (12) and a second line for discharging an ammonium sulfate/sulfite solution (17),
wherein
d) a connecting line (14) branches off from the second line to an afterburning zone (3) downstream of an introduction of secondary gas (4).

## Revendications

1. Procédé permettant de réduire les oxydes d'azote et les composés organiques halogénés dans des installations d'incinération comportant au moins une chambre de combustion (1, 3), le dioxyde de soufre SO₂ étant séparé sélectivement des gaz de combustion dans au moins un élément de lavage (9) au moyen d'ammoniac ou de composés d'ammonium, une solution aqueuse sulfate d'ammonium/sulfite d'ammonium étant formée, solution qui est totalement ou partiellement recyclée dans la chambre de combustion, ce procédé comportant les étapes suivantes :
a) séparation de cendres volantes avec séparateur de poussière (7),
b) séparation d'acide chlorhydrique dans un premier élément de lavage (8) à fonctionnement acide avec addition d'eau,
c) séparation de SO₂ dans un second élément de lavage (9) à fonctionnement neutre ou faiblement acide avec addition d'eau et ammoniac, la formation de sulfite d'ammonium puis par réaction avec de l'oxygène, de sulfate d'ammonium, dissout dans l'eau se produisant,
d) transfert et injection de la solution aqueuse sulfate d'ammonium/sulfite d'ammonium dans les gaz de combustion renfermant de l'oxygène après addition de gaz secondaire, la décomposition du sulfate et du sulfite d'ammonium avec production d'ammoniac et de SO₂ se produisant,
- les oxydes d'azote présents dans les gaz de combustion étant réduits en azote et en eau par l'ammoniac et de l'oxygène par réduction sélective non catalytique, et
- simultanément, les cendres volantes renfermant du chlore présentes dans les gaz de combustion réagissant avec le SO₂, l'eau et l'oxygène pour former des sulfates avec formation d'acide chlorhydrique.

2. Procédé conforme à la revendication 1,
selon lequel
la solution aqueuse sulfate d'ammonium/sulfite d'ammonium est ajoutée dans les gaz de combustion renfermant de l'oxygène dans une plage de températures comprise entre 850 et 1050°C, après la zone de brûlage des gaz de combustion.

3. Procédé conforme à la revendication 1 ou 2,
selon lequel
l'addition de la solution sulfate d'ammonium/sulfite d'ammonium est effectuée au moyen de buses mono ou multi matière(s).

4. Dispositif pour la réduction de composés organiques halogénés dans des installations d'incinération comportant au moins une chambre de combustion comprenant :
a) un séparateur de poussière (7) pour la séparation des cendres volantes (15),
b) un premier élément de lavage (8) à fonctionnement acide pour séparer l'acide chlorhydrique comportant une première conduite (16) d'évacuation de l'acide chlorhydrique, et
c) un second élément de lavage (9) à fonctionnement neutre ou faiblement acide et monté en aval du premier élément de lavage comportant une conduite d'amenée (12) de l'eau et de l'ammoniac et une seconde conduite (17) d'évacuation d'une solution sulfate d'ammonium/sulfite d'ammonium,
d) une conduite de liaison (14) conduisant à une zone de postcombustion (3) étant branchée sur la seconde conduite après introduction de gaz secondaires (4).
